# EUROPÄISCHE PATENTSCHRIFT

(11) **EP 2 030 956 B1**
(45) Veröffentlichungstag und Bekanntmachung des Hinweises auf die Patenterteilung: **22.04.2015**
(21) Anmeldenummer: 08162336.5
(22) Anmeldetag: 13.08.2008
(51) Int. Cl.: C04B 28/18

(54) **Mineralisches Bindemittel sowie ein Verfahren zu seiner Herstellung**
Mineral adhesive agent and method for its manufacture
Liant minéral et son procédé de fabrication

(30) Priorität: 27.08.2007 DE 102007040349
(43) Veröffentlichungstag der Anmeldung: 04.03.2009
(60) Teilanmeldung: 13189323.2
(73) Patentinhaber: Dyckerhoff GmbH, 65203 Wiesbaden (DE)
(72) Erfinder: Parker, Frank, 65205 Wiesbaden (DE); Strunge, Josef, 65203 Wiesbaden (DE); Deuse, Thomas, 63075 Offenbach (DE)
(74) Vertreter: Solf, Alexander

(56) Entgegenhaltungen:
- EP-A1- 1 719 742
- DE-B4- 10 066 270
- DE-U1- 9 420 914
- STARK, J. & WICHT, B.: "Zement und Kalk - Der Baustoff als Werkstoff" 2000, BIRKHÄUSER VERLAG , BASEL , XP002548275 Kapitel Microsilica, Seite 241-242 * Seite 241, Zeilen 5-7 *

## Beschreibung

Die Erfindung betrifft ein mineralisches Bindemittel sowie ein Verfahren zu seiner Herstellung auf Basis insbesondere genormter Zemente, insbesondere zur Herstellung von frühfesten und/oder hochfesten Betonen oder Mörteln oder Zementsuspensionen.

Frühfeste und/oder hochfeste Betone bezeichnet man auch als Hochleistungsbetone, die schnell erstarren und erhärten (schnelle Betone) oder höhere Festigkeiten erbringen und besonders beständig gegen aggressive Medien sind (hochfeste Betone).

Schnelle Betone werden in der Regel mit sogenannten Schnellzementen aus besonderen Klinkern, die z.B. im wesentlichen Calciumsulfoaluminate aufweisen, oder aus Tonerdeschmelzzementen oder Gemischen aus Tonerdeschmelzzement mit Portlandzement oder den besonderen Klinkern hergestellt, wobei die Frühfestigkeit in der Regel mit organischen Zusatzmitteln ausgesteuert werden kann. Derartige Zusatzmittel sind Fremdbestandteile in diesen mineralischen Gemengen, können unerwünschte Nebenwirkungen haben und reagieren unkontrollierbar bei Temperaturunterschieden und/oder Rohstoffschwankungen bis hin zu gegenteiligen Wirkungen wie langsames Erstarren und Erhärten oder sogar Ausfall des Erstarrens und Erhärtens. Insofern ist diese Schnellzementkonzeption insbesondere zur Herstellung von Transportbeton relativ ungeeignet.

Ein anderes Schnellzementkonzept sieht ein hydraulisches Bindemittel mit einer nach Wasserzugabe fließ- und erstarrungsfähigen Bindemittelkomponente und einer zum Beschleunigen des Erstarrens dienenden Beschleunigerkomponente vor, wobei die Beschleunigerkomponente hochfeines Calciumhydroxid mit bestimmten spezifischen Oberflächen und/oder Teilchengrößen sein soll (DE 10 2005 018 100 A1). In diesem Dokument ist der derzeit bekannte Stand der Technik auf dem Sachgebiet zusammengefasst dargestellt, wobei darauf hingewiesen wird, dass für die Festigkeitsbildung die beschleunigte Bildung der Calciumsilikathydratphasen aus den Calciumsilikaten der Zementpartikel maßgeblich ist. Demgemäß soll das zugesetzte hochfeine Calciumhydroxid die nach etwa 6 bis 8 Stunden beginnende Calciumslikathydratbildung (CSH-Bildung) durch Keimbildung beschleunigen.

Bei Schnellzementen mit Calciumhydroxid als Beschleunigerkomponente gemäß DE 10 2005 018 100 A1 besteht die Gefahr einer unzureichenden Lagerstabilität. Calciumhydroxid karbonatisiert bekanntlich bei Zutritt von Luftkohlendioxid. In der Folge ist das Reaktionsverhalten dieser Schnellzemente nicht konstant. Damit kann das hohe Frühfestigkeitspotenzial nicht immer ausgeschöpft werden.

Für hochfeste und besonders beständige Betone werden meist C₃A-arme Portlandzemente der Festigkeitsklasse 42,5 bzw. 52, 5 R in Kombination mit Mikrosilika, das bei der Ferrosiliziumherstellung als Flugstaub abgeschieden wird und z.B. zu 85 bis 98 Gew.-% aus amorphem SiO₂ besteht, eingesetzt. Ziel ist dabei, bereits in der trockenen Phase eine möglichst dichte Kugelpackung zu realisieren, die nach Wasserzugabe dann auch zu einem partikeldicht gelagerten Zementleim führt. Zudem soll das Mikrosilika mit dem Calciumhydroxid (Ca(OH)₂), das erst nach etwa 6 bis 8 Stunden aus der Reaktion der Zementklinkerphasen (Calciumsilikatphasen, insbesondere C₃S) mit Wasser freigesetzt wird, reagieren.

Während sich die Hydratphasen aus z.B. dem C₃A und C₃S der Klinkerpartikel bilden, bilden Mikrosilika und Ca(OH)₂ zusätzliche C-S-H-Phasen, die dann in die noch vorhandenen Freiräume hineinwachsen und damit die erhärtende Zementsteinmatrix dichter werden lassen. Im Ergebnis entstehen aufgrund dieser puzzolanischen Reaktion zwischen dem Mikrosilika und dem Ca(OH)₂ besonders dichte und damit widerstandsfähige und dauerhafte Betone mit zum Teil extrem hoher Druckfestigkeit. Nachteilig ist bei Einsatz von Mikrosilika (Silikastaub aus der Eisensilizid-Gewinnung) die für Sichtbeton meist zu dunkle und ungleichmäßige Betonfarbe sowie die Notwendigkeit einer separaten aufwendigen und komplizierten Dosiereinrichtung.

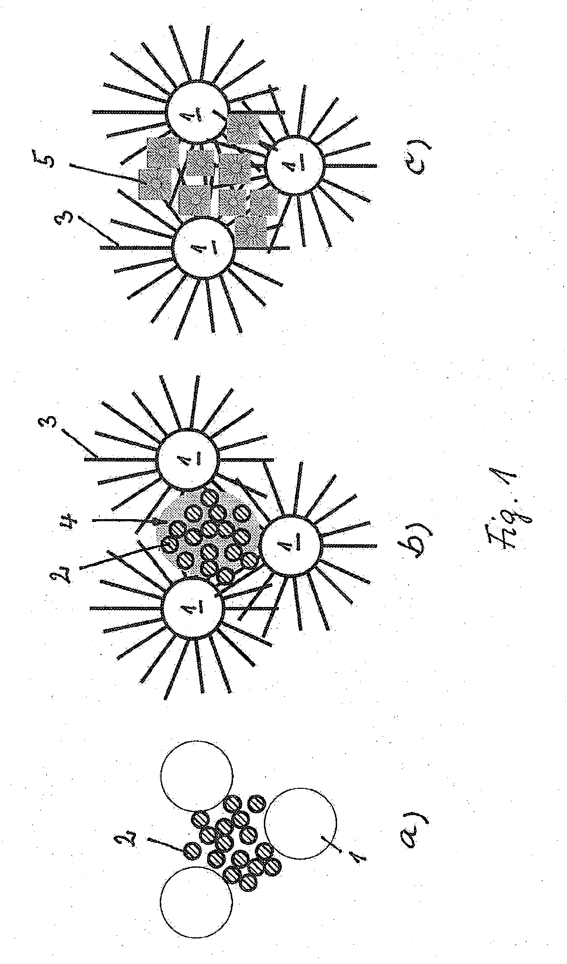

Das Reaktionsprinzip der puzzolanischen Reaktion mit z.B. Mikrosilika und Ca(OH)₂ ergibt sich schematisch aus Fig. 1a, b, c. Zunächst liegt eine trockene Mischung aus Zementteilchen 1 und Mikrosilikateilchen 2 vor (Fig. 1a). Nach dem Anmischen mit Wasser ergibt sich nach dem Erstarren die dem Fachmann bekannte Ruhephase der Mischung ohne beachtliche bzw. weitergehende Erhärtung. Erst nach z.B. etwa 6 bis 8 Stunden erfolgt eine Erhärtungsreaktion der Silikat- und Aluminatphasen mit Wasser unter Bildung von z.B. nadelförmigen CSH-Phasenkristallen 3, wobei Ca(OH)₂ 4, freigesetzt wird (Fig. 1b). Das Ca(OH)₂ reagiert mit den Mikrosilikateilchen 2 und bildet zusätzlich feine C-S-H-Phasenkristalle 5. Diese verdichten die Struktur des erhärtenden Zementsteins und schaffen durch diese puzzolanische Reaktion ein dichteres Gefüge mit höheren Festigkeiten und Dauerhaftigkeiten (Fig. 1c).

Für das bekannte puzzolanische Reaktionsprinzip steht nicht nur Mikrosilika zur Verfügung, sondern es werden auch andere SiO₂-Komponenten wie Silikastaub, Nanosilika, Metakaolin oder Flugasche verwendet.

Eine weitergehende Technologie zur Herstellung von Hochleistungsbetonen, die ebenfalls lediglich auf mineralischer Basis die Frühfestigkeitssteigerung ermöglicht und ohne puzzolanische Reaktionen auskommen kann, basiert auf lediglich granulometrisch optimierten Bindemitteln. Zum Einsatz kommen Normalzemente in Kombination mit Feinstzementen; die Herstellung letzterer ist z.B. aus der EP 0 696 558 B1 bekannt. Die Feinstzemente haben eine Feinheit der Körnung unter 20 µm und können großtechnisch bis Feinheiten der Körnungen von 2 µm wirtschaftlich hergestellt werden.

Nach dieser Technologie können rezepturabhängig Hochleistungzemente für frühhochfeste Betone, Zemente für hochfeste Betone, insbesondere auch für hochfeste Sichtbetone, und Zemente mit besonderer Beständigkeit z.B. bezüglich aggressiver Medien gewährleistet werden. Dabei handelt es sich um Normzemente mit außergewöhnlichen Eigenschaften, die lediglich zur Einstellung der Verarbeitbarkeit noch Zusatzmittel erfordern.

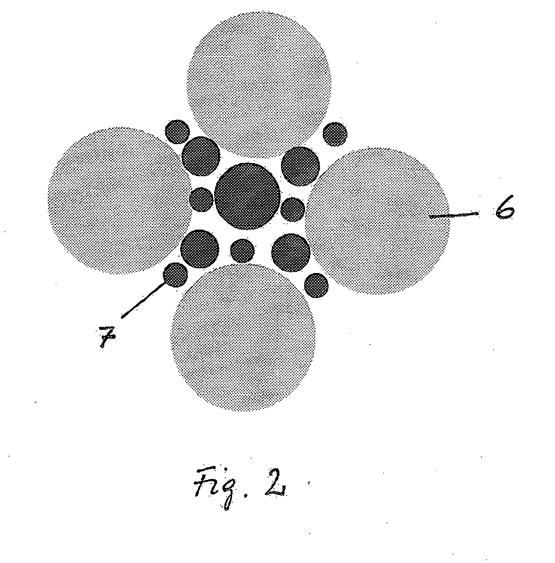

Fig. 2 verdeutlicht schematisch das Prinzip dieser Technologie. Man erkennt die relativ groben Körner 6 des Normalzements mit Korngrößen z.B. d₉₅ zwischen 25 und 30 µm und in den Zwickeln der groben Körner 6 die relativ kleinen Körner 7 des Feinstzements mit Korngrößen z.B. d₉₅ zwischen 2 und 20 µm. Eine Ergänzung und Steigerung der Frühfestigkeit nach z.B. 6 bis 8 Stunden kann dieses Prinzip durch den Zusatz von Ca(OH)₂ (DE 10 2005 018 100 A1) oder von feinteiliger Kieselsäure erfahren.

Damit ist dieses Prinzip ausgereizt, ohne dass aber die Endfestigkeiten gesteigert (siehe DE 10 2005 018 100 A1, Tabelle 1: Druckfestigkeiten nach 28 Tagen) und die Frühfestigkeiten früher eingestellt und geregelt werden können.

Aufgabe der Erfindung ist, ein hydraulisches, insbesondere lagerstabiles Bindemittel auf lediglich mineralischer Basis mit früheren hohen Frühfestigkeiten und gesteigerten Endfestigkeiten im Vergleich zu bekannten, derartigen hydraulischen Bindemitteln zu schaffen, das insbesondere zur Herstellung sowohl schneller als auch hochfester als auch besonders beständiger Betone geeignet ist, wobei die Höhe der Festigkeiten auf einfache Weise regelbar sein soll.

Diese Aufgabe wird durch die Merkmale des Anspruchs 1 gelöst. Vorteilhafte Weiterbildungen der Erfindung werden in den Unteransprüchen gekennzeichnet.

Mit den neuen erfindungsgemäßen hydraulischen Bindemitteln können nummehr frühere hohe Frühfestigkeiten bereits in der Ruhephase der wasserhaltigen Gemische erzeugt werden, weil das System unabhängig von der späteren Festigkeitsentwicklung der Zementmineralphasen ist. Insofern ist das System auch relativ unabhängig von der Ca(OH)₂-Entwicklung aus der späteren Zementmineralphasenentwicklung, insbesondere aus dem C₃S. Mithin kann eine Vielzahl von Zementsorten bzw. Zementtypen verwendet werden, die unterschiedliche Reaktionsmechanismen zur Erhärtung nach der Ruhephase aufweisen. Vorzugsweise aber werden zur Herstellung der erfindungsgemäßen hydraulischen Bindemittel Portlandzemente, Portlandkompositzemente und Hochofenzemente verwendet, deren normale Erhärtung aufgrund der Reaktion der Zementmineralphasen meist erst nach Ruhephase nach z.B. etwa 6 bis 8 Stunden einsetzt. Es gibt aber auch Zemente mit kürzeren Ruhephasen, z.B. 2 bis 6 Stunden. Die Erfindung sieht vor, die frühe puzzolanische Reaktion zeitlich so abzustimmen, dass sie in die Ruhephase des jeweiligen Zements fällt.

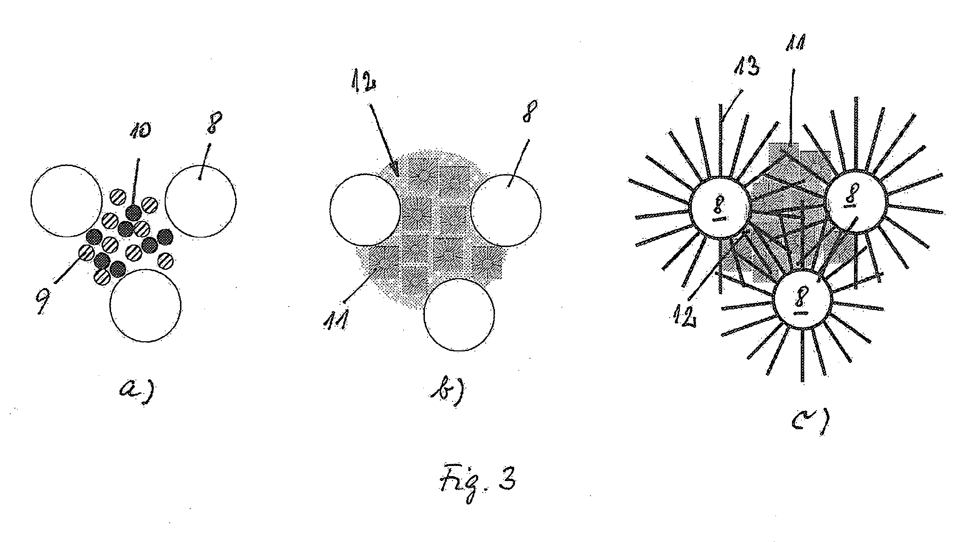

Das erfindungsgemäße Prinzip wird in Fig. 3a, b, c verdeutlicht. Die Ausgangstrockenmischung des erfindungsgemäßen hydraulischen Bindemittels enthält relativ grobe Zementpartikel 8. In den Zwickeln dieser Zementpartikel 8 befinden sich Partikel 9 einer zugesetzten, feinteiligen (mehlfeinen) SiO₂-Komponente und Partikel 10 einer zugesetzten, feinteiligen (mehlfeinen) CaO-Komponente (Fig. 3a). Nach Zugabe von Wasser beginnt insbesondere in der Ruhephase, in jedem Fall aber vor der Entwicklung der CSH-Phasen aus den Zementmineralen, die Reaktion zwischen der SiO₂-Komponente und der CaO-Komponente. Es bilden sich schon nach z.B. ca. 1 Stunde ausreichend feinteilige, erhärtende Calciumsilikatphasen 11 (Fig. 3b), ohne dass die Verarbeitbarkeit (Rheologie) beeinträchtigt wird. Im Anschluss daran oder auch schon gegen Ende dieser ersten puzzolanischen Erhärtungsphase bildet sich aus den Zementpartikeln 8 Ca(OH)₂ 12 und schließlich die C-S-H-Phasen 13, wobei letztere in das bereits vorhandene C-S-H-Phasengefüge 11 der vorläufigen puzzolanischen Reaktion hineinwachsen (Fig. 3c).

Es hat sich gezeigt, dass die spätere Erhärtungsreaktionen der Zementpartikel frühzeitiger bezüglich der Ruhephase beginnt und damit die Ruhephase verkürzt wird, wenn erfindungsgemäß bereits die vorläufig entwickelten puzzolanischen Erhärtungsphasen vorliegen. Insofern wirkt das frühere puzzolanische System synergistisch.

Es ist überraschend, dass die puzzolanische Reaktion keinen nachteiligen Einfluß auf die Verarbeitbarkeit und die nachfolgenden Erhärtungsreaktionen der Zementminerale nach der Ruhephase hat.

Überraschend ist auch, dass erfindungsgemäß nicht nur Frühfestigkeiten zu einem sehr viel früheren Zeitpunkt, nämlich während der Ruhephase, erzielbar sind, sondern dass auch die Endfestigkeiten nach 28 Tagen erheblich gesteigert werden können.

Eine Ausführungsform der Erfindung sieht vor, Normalzemente mit Körnungen d₉₅ zwischen 20 und 70, insbesondere d₉₅ zwischen 25 und 35 µm mit der SiO₂-Komponente und der CaO-Komponente zu kombinieren. Nach einer weiteren Ausführungsform der Erfindung werden Normalzemente mit Feinstzementen mit Körnungen d₉₅ zwischen 2 und 20 µm, insbesondere d₉₅ zwischen 6 und 16 µm zusammengemischt und mit der SiO₂- und der CaO-Komponente für die frühe puzzolanische Reaktion kombiniert. Schließlich sieht eine dritte Ausführungsform der Erfindung vor, für die SiO₂-Komponente mindestens zwei verschiedene SiO₂-Komponenten zu verwenden, die sich bezüglich ihres Korngrößenspektrums und vorzugsweise auch aufgrund ihrer Herstellung unterscheiden. Dabei wird eine erste SiO₂-Komponente z.B. gefällte synthetische Kieselsäure mit Agglomerat-Korngrößen d₉₅ zwischen 3 und 15, insbesondere d₉₅ zwischen 3 und 5 µm (mittlere Teilchengröße, gemessen mit einem Multisizer mit einer 100 µm Kapillare in Anlehnung an ASTM C 690-1992) und eine zweite SiO₂-Komponente z.B. pyrogene synthetische Kieselsäure mit Primärteilchengrößen bzw. mittlerer Größe der Primärteilchen zwischen 0,007 und 0,04 µm (7 bis 40 nm), insbesondere zwischen 0,01 und 0,02 µm verwendet. Mit dem Mengenverhältnis dieser beiden Komponenten kann auf einfache Weise die Festigkeitsentwicklung der puzzolanischen Reaktion geregelt bzw. gesteuert werden, weil die feinen Bestandteile der feineren SiO₂-Komponente schneller reagieren.

Feinteilig im Sinne der Erfindung und auf dem Sachgebiet meint Korngrößen < 15 µm; feinstteilig meint nanoskaliert mit Teilchengrößen z. B. Primärteilchengrößen < 0,04 µm. Die Normalzemente weisen Korngrößen d₉₅ zwischen 20 und 70 µm und spezifische Oberflächen zwischen 0,3 und 0,8 m²/g nach Blaine und Feinstzemente Korngrößen d₉₅ zwischen 2 und 20 µm sowie spezifische Oberflächen zwischen 1 und 5 m²/g gemessen nach BET auf.

Eine weitere einfache Regelbarkeit ergibt sich durch die Verwendung unterschiedlicher CaO-Komponenten, indem die Verwendung von CaO (Branntkalk) eine schnellere Reaktion und höhere Frühfestigkeiten und Endfestigkeiten erbringt als die Verwendung von Ca(OH)₂ (Kalkhydrat). Offenbar spielt dabei die Ablöschreaktion des Branntkalks bei Zutritt des Anmachwassers eine wesentliche Rolle, indem das daraus resultierende Ca(OH)₂ im stadium naszendi besonders günstige Reaktionsbedingungen mit der SiO₂-Komponente schafft.

Besonders effektive Zusammensetzungen erfindungsgemäßer hydraulischer Bindemittel ergibt sich aus Tabelle 1.

**Tabelle 1**

| | **Korngröße (µm) d₉₅** | **Mengenanteil [Gewichtsteile]** |
|---|---|---|
| **Normalzement** | 20 bis 70 | 0 bis 100 |
| | insbes. 25 bis 35 | vorzugsw. 40 bis 90 |
| | | insbes. 50 bis 80 |
| **Feinstzement** | 2 bis 20 | 0 bis 100 |
| **und/od.Klinkerfeinstmehl und/od. Hüttensandfeinstmehl** | insbes. 6 bis 16 | vorzugsw. 1 bis 50 |
| | | insbes. 25 bis 30 |
| **Erste SiO₂-Komponente** | 3 bis 15 | 0 bis 5 |
| **(Agglomeratteilchen)** | insbes. 3 bis 5 | vorzugsw.0,1 bis 5 |
| | | insbes. 0,1 bis 5 |
| **Zweite SiO₂-Komponente** | 0,007 bis 0,04 | 0 bit 5 |
| **(Primärteilchen)** | insbes. 0,01 bits 0,02 | vorzugsw. 0,1 bis 5 |
| | | insbes. 0,1 bis 3 |
| **CaO-Komponente** | 0,5 bis 100 | 0 bis 15 |
| | insbes. 20 bis 80 | vorzugsw.0,1 bis 15 |
| | | insbes. 0,1 bis 5 |
| **Ca(OH)₂-Komponente** | 0,7 bis 100 | 0 bis 15 |
| | insbes. 0,7 bis 35 | vorzugsw.0,1 bis 15 |
| | | insbes. 0,1 bis 5 |

Als Normalzemente werden bevorzugt verwendet genormte Portlandzemente, Portlandkompositzemente und Hochofenzemente, wobei vornehmlich Portlandzemente verwendet werden. Vorzugsweise werden Feinstzemente verwendet, die gemäß EP 0 696 558 B1 hergestellt sind.

Die erste nanoskalierte SiO₂-Komponente ist insbesondere eine gefällte, synthetische Kieselsäure (z. B. SIPERNAT der Firma Degussa) mit der spezifischen Oberflache (Spezifische Oberfläche in N₂-Atmosphäre) gemessen mit Areameter in Anlehnung an ISO 5794-1, Annex D) zwischen 50 und 750, insbesondere zwischen 50 und 200 m²/g und die zweite nanoskalierte SiO₂-Komponente eine pyrogene Kieselsäure (z.B. AEROSIL der Firma Degussa) mit einer spezifischen Oberfläche nach BET gemäß nach DIN 66136 zwischen 30 und 380, insbesondere zwischen 50 und 200 m²/g.

Diese nanoskalierten synthetischen Kieselsäuren können pyrogen aus der Verdampfung von Silicium-Tetrachlorid in einer Knallgasflamme oder durch einen nasschemischen Fällungsprozess aus Wasserglas und Schwefelsäure gewonnen werden. Bei beiden Prozessen entstehen Primärpartikel im Bereich weniger Nanometer: z.B. 5 bis 50 Nanometer bei pyrogenen synthetischen Kieselsäuren (Aerosil) und 5 bis 100 Nanometer bei gefällten synthetischen Kieselsäure (Sipernat). Diese Primärpartikel bilden im Herstellungsprozess unmittelbar über Feststoffbrücken verbundene Aggregate, die anschließend agglomerieren. Diese Agglomerate können durch scherintensive Einarbeitung in andere Materialien dann wieder zu Aggregaten dispergiert werden. Die Aggregatgröße liegt bei den pyrogenen Kieselsäuren unterhalb 200 Nanometer (z.B. < 0,2 µm) und bei den gefällten synthetischen Kieselsäuren jedoch schon im Mikrometerbereich (z.B. > 3 µm).

Die CaO-Komponente ist vorzugsweise gebrannter Kalk, wie Weißfeinkalk und/oder gebrannter hydraulischer Kalk, oder ein Kalkhydrat wie Weißfeinkalkhydrat und/oder hydraulisches Kalkhydrat. Die spezifische Oberfläche des Branntkalks liegt vorzugsweise zwischen 1 und 3 m²/g (BET). Die spezifische Oberfläche des Kalkhydrats liegt vorzugsweise zwischen 18 und 25 m²/g oder größer (BET).

Nach einer besonderen Ausführungsform der Erfindung kann auf einfache Weise eine besonders hohe Lagerstabilität der erfindungsgemäßen Mischungen erreicht werden, indem eine Vormischung mindestens einer sehr leichten synthetischen Kieselsäuren mit dem vergleichsweise schweren Branntkalk und/oder Kalkhydrat vorgenommen wird. Offenbar schützt die Kieselsäurekomponente die sehr hydrophilen CaO-Komponenten vor vorzeitigen Reaktionen mit Luftfeuchtigkeit und Kohlendioxid aus der Luft.

Etwa eine Stunde nach Wasserzugabe beginnt erfindungsgemäß als frühe bzw. vorgezogene puzzolanische Reaktion die Bildung von C-S-H-Phasen 27 aus Ca(OH)₂ und synthetischer Kieselsäure, die z.B. dann etwa 3 Stunden nach Wasserzugabe weitgehend abgeschlossen ist. Diese puzzolanische Reaktion kann aber auch länger andauern, z.B. bis zu 6 Stunden, weil sie abhängig ist von der Reaktivität der Reaktionspartner.

Nach z.B. etwa 6 bis 8 Stunden durchwachsen dann C-S-H-Phasen aus der Zementmineralreaktion mit Wasser das Konglomerat aus C-S-H-Phasen der früheren puzzolanischen Reaktion.

## Patentansprüche

1. Mineralisches, hydraulisches Bindemittel, insbesondere zur Herstellung von Beton oder Mörteln oder Zementsuspensionen auf Basis von zumindest einem Zement, wobei der Zement Klinkerphasen wie insbesondere C₃S, C₂S, C₃A, C₄AF sowie ggf. Nebenbestandteile aufweist, die mit Wasser zu Zementstein erhärtende Hydratphasen bilden, und wobei der Zement nach dem Anmachen mit Wasser eine Ruhephase von einigen Stunden aufweist, in der keine beachtlichen Erhärtungsreaktionen stattfinden,
**gekennzeichnet durch**
- mindestens eine feinteilige SiO₂-Komponente in Form einer pyrogenen Kieselsäure mit Primärteilchengrößen zwischen 0,007 und 0,04 µm und SiO₂-Gehalten zwischen 96 bis 100 Gew.-%;
- mindestens eine feinteilige CaO-Komponente in Form von
- Calciumoxid, welches 90 bis 99 Gew.-% CaO und Korngrößen zwischen 0,5 und 100 µm aufweist und/der
- Kalkhydrat mit CaO-Gehalten zwischen 60 und 75 Gew.-% und Korngrößen zwischen 0,7 und 100 µm enthält;
- wobei die mindestens eine SiO₂-Komponente und die mindestens eine CaO-Komponente mit Anmachwasser während der Ruhephase aufgrund einer puzzolanischen Reaktion erhärtende, eine Frühfestigkeit bewirkende Calciumsilikathydratphasen bilden.

2. Bindemittel nach Anspruch 1,
**gekennzeichnet durch**
mindestens zwei hersteltungsbedingt unterschiedliche SiO₂-Komponenten mit unterschiedlichen Korngrößenbereichen, wobei die eine SiO₂-Komponente eine pyrogene Kieselsäure und die andere SiO₂-Komponente eine gefällte Kieselsäure ist, wobei das Mengenverhältnis in Gew.-%, vorzugsweise von 1:1 bis 1:50, insbesondere von 1:2 bis 1:5 beträgt.

3. Bindemittel nach Anspruch 1 und/oder 2,
**dadurch gekennzeichnet, dass**
die pyrogene Kieselsäure Primärteilchengrößen d₉₅ zwischen 0,01 und 0,02 µm aufweist.

4. Bindemittel nach einem oder mehreren der Ansprüche 1 bis 3,
**dadurch gekennzeichnet, dass**
die SiO₂-Kornponente in Mengen von 0,1 bis 5, insbesondere von 0,1 bis 3 Gew.-%, bezogen auf den Zementanteil im Bindemittel enthalten ist.

5. Bindemittel nach einem oder mehreren der Ansprüche 1 bis 4,
**dadurch gekennzeichnet, dass**
die CaO-Komponente in Form von Weißfeinkalk oder hydraulischem Kalk 90 bis 99, insbesondere 95 bis 98 Gew.-% CaO aufweist.

6. Bindemittel nach Anspruch 5,
**dadurch gekennzeichnet, dass**
die CaO-Komponente Korngrößen d₉₅ zwischen 20 und 80 µm aufweist.

7. Bindemittel nach einem oder mehreren der Ansprüche 1 bis 6,
**dadurch gekennzeichnet, dass**
die CaO-Komponente Kalkhydrat mit CaO-Gehalten zwischen 60 und 75, insbesondere zwischen 70 und 75 Gew.-% ist und Korngrößen zwischen 0,7 und 100 µm aufweist.

8. Bindemittel nach einem oder mehreren der Ansprüche 1 bis 7,
**dadurch gekennzeichnet, dass**
der Zement ein genormter Zement nach EN 197 und/oder DIN 1164 ist und eine normale Feinheit mit Korngrößen d₉₅ zwischen 20 und 70 µm sowie spezifische Oberflächen zwischen 0.3 und 0,8 m²/g aufweist.

9. Bindemittel nach Anspruch 8,
**dadurch gekennzeichnet, dass**
der Zement ein Portlandzement oder Portlandkompositzement oder Hochofenzement ist.

10. Bindemittel nach Anspruch 9,
**dadurch gekennzeichnet, dass**
ein Feinstzement insbesondere zusätzlich mit Feinheiten d₉₅ zwischen 2 und 20 µm Korngröße sowie 1 und 5 m²/g spezifischer Oberfläche enthalten ist, wobei der Feinstzement auf der Basis von Portlandzementklinker und/oder Hüttensandfeinstmehl hergestellt ist.

11. Bindemittel nach Anspruch 10,
**dadurch gekennzeichnet, dass**
das Gewichtsverhältnis zwischen Normalzement und Feinstzement 0:100 oder 100:0 bis 20:1, insbesondere 3:1 bis 5:1 beträgt.

12. Bindemittel nach einem oder mehreren der Ansprüche 1 bis 11,
**dadurch gekennzeichnet, dass**
der Weißfeinkalk und/oder der hydraulische Kalk eine spezifische Oberfläche zwischen 1 und 3 m²/g aufweisen.

13. Bindemittel nach einem oder mehreren der Ansprüche 1 bis 12,
**dadurch gekennzeichnet, dass**
das Weißfeinkalkhydrat und/oder das hydraulische Kalkhydrat eine spezifische Oberfläche zwischen 18 und 25 m²/g aufweisen.

14. Verfahren zur Herstellung eines Bindemittels nach einem oder mehreren der Ansprüche 1 bis 13 durch trockenes Mischen der Bestandteile,
**dadurch gekennzeichnet, dass**
durch eine Vormischung mindestens einer SiO₂-Komponente mit mindestens einer CaO-Komponente vorgemischt und anschließend die Vormischung mit der Zement enthaltenden Mischung gemischt wird.

## Claims

1. A mineral, hydraulic binder, in particular for the production of concrete or mortars or cement suspensions based on at least one cement, wherein the cement comprises clinker phases such as in particular C₃S, C₂S, C₃A, C₄AF and optionally secondary constituents, which form hydrate phases that harden with water into hardened cement paste, and wherein the cement has a rest period of several hours after mixing with water, in which period no significant hardening reactions take place,
**characterised by**
- at least one finely divided SiO₂ component in the form of a pyrogenic silica with primary particle sizes of between 0.007 and 0.04 µm and SiO₂ contents of between 96 and 100 wt.%;
- at least one finely divided CaO component in the form of
- calcium oxide, which comprises 90 to 99 wt.% CaO and particle sizes of between 0.5 and 100 µm and/or
- contains hydrated lime with CaO contents of between 60 and 75 wt.% and particle sizes of between 0.7 and 100 µm;
- wherein the at least one SiO₂ component and the at least one CaO component form calcium silicate hydrate phases with mixing water which harden during the rest period by virtue of a pozzolanic reaction and create early strength.

2. The binder according to claim 1,
**characterised by**
at least two SiO₂ components which are different as a result of their production with different particle size ranges, wherein the one SiO₂ component is a pyrogenic silica and the other SiO₂ component is a precipitated silica, wherein the quantitative ratio in wt.% is preferably from 1:1 to 1:50, in particular from 1:2 to 1:5.

3. The binder according to claim 1 and/or 2,
**characterised in that**
the pyrogenic silica has primary particle sizes d₉₅ of between 0.01 and 0.02 µm.

4. The binder according to one or more of claims 1 to 3,
**characterised in that**
the SiO₂ component is contained in quantities of 0.1 to 5, in particular 0.1 to 3 wt.%, based on the proportion of cement in the binder.

5. The binder according to one or more of claims 1 to 4,
**characterised in that**
the CaO component comprises 90 to 99, in particular 95 to 98 wt.% CaO in the form of fine-ground high-calcium lime or hydraulic lime.

6. The binder according to claim 5,
**characterised in that**
the CaO component has particle sizes d₉₅ of between 20 and 80 µm.

7. The binder according to one or more of claims 1 to 6,
**characterised in that**
the CaO component is hydrated lime with CaO contents of between 60 and 75, in particular between 70 and 75 wt.%, and has particle sizes of between 0.7 and 100 µm.

8. The binder according to one or more of claims 1 to 7,
**characterised in that**
the cement is a standardised cement according to EN 197 and/or DIN 1164 and has a normal fineness with particle sizes d₉₅ of between 20 and 70 µm and specific surface areas of between 0.3 and 0.8 m²/g.

9. The binder according to claim 8,
**characterised in that**
the cement is a Portland cement or Portland composite cement or blast furnace cement.

10. The binder according to claim 9,
**characterised in that**
an ultrafine cement is in particular additionally contained with finenesses d₉₅ of between 2 and 20 µm particle size and 1 and 5 m²/g specific surface area, wherein the ultrafine cement is produced on the basis of Portland cement clinker and/or ultrafine ground granulated blast furnace slag.

11. The binder according to claim 10,
**characterised in that**
the weight ratio between normal cement and ultrafine cement is 0:100 or 100:0 to 20:1, in particular 3:1 to 5:1.

12. The binder according to one or more of claims 1 to 11,
**characterised in that**
the fine-ground high-calcium lime and/or the hydraulic lime have a specific surface area of between 1 and 3 m²/g.

13. The binder according to one or more of claims 1 to 12,
**characterised in that**
the hydrated fine-ground high-calcium lime and/or the hydrated hydraulic lime have a specific surface area of between 18 and 25 m²/g.

14. A process for the production of a binder according to one or more of claims 1 to 13 by dry mixing of the constituents,
**characterised in that**
pre-mixing is carried out by means of a pre-mix of at least one SiO₂ component with at least one CaO component and then the pre-mix is mixed with the mixture containing cement.

## Revendications

1. Liant minéral hydraulique, en particulier pour la production de béton ou de mortier ou de suspensions de ciment à base d'au moins un ciment, dans lequel le ciment présente des phases de clinker telles que, en particulier, C₃S, C₂S, C₃A, C₄AF et éventuellement des composants secondaires qui forment avec l'eau des phases d'hydrate durcissant en pierre de ciment, et dans lequel le ciment présente, après le gâchage avec de l'eau, une phase de repos de quelques heures, dans laquelle il ne se produit aucune action de durcissement notable,
**caractérisé par**
- au moins un composant de SiO₂ à particules fines sous la forme d'un acide silicique pyrogène présentant une taille de particules primaires entre 0,007 et 0,04 µm et des teneurs en SiO₂ comprises entre 96 et 100 % en poids,
- au moins un composant de CaO à particules fines sous la forme
- d'oxyde de calcium qui présente 90 à 99 % en poids de CaO et une granulométrie comprise entre 0,5 et 100 µm et/ou
- un hydrate de chaux présentant des teneurs en CaO comprises entre 60 et 75 % en poids et une granulométrie comprise entre 0,7 et 100 µm ;
- dans lequel l'au moins un composant de SiO₂ et l'au moins un composant de CaO forment, avec l'eau de gâchage pendant la phase de repos, des phases d'hydrate de silicate de calcium entraînant une résistance précoce, en raison d'une réaction pouzzolanique.

2. Liant selon la revendication 1,
**caractérisé par**
au moins deux composants de SiO₂ différents du point de vue de la production, présentant diverses plages de granulométrie, dans lequel un composant de SiO₂ est un acide silicique pyrogène et l'autre composant de SiO₂ est un acide silicique précipité, dans lequel le rapport des quantités en % en poids est de préférence de 1:1 à 1:50, en particulier, de 1:2 à 1:5.

3. Liant selon la revendication 1 et/ou 2,
**caractérisé en ce que**
l'acide silicique pyrogène présente des tailles de particules primaires d₉₅ comprises entre 0,01 et 0,02 µm.

4. Liant selon une ou plusieurs des revendications 1 à 3,
**caractérisé en ce que**
le composant de SiO₂ est contenu en quantités allant de 0,1 à 5, en particulier de 0,1 à 3 % en poids par rapport à la proportion de ciment dans le liant.

5. Liant selon une ou plusieurs des revendications 1 à 4,
**caractérisé en ce que**
le composant de CaO présente, sous la forme de chaux blanche fine ou de chaux hydraulique, 90 à 99, en particulier 95 à 98 % en poids de CaO.

6. Liant selon la revendication 5,
**caractérisé en ce que**
le composant de CaO présente des granulométries d₉₅ comprises entre 20 et 80 µm.

7. Liant selon une ou plusieurs des revendications 1 à 6,
**caractérisé en ce que**
le composant de CaO présente de l'hydrate de chaux ayant une teneur en CaO comprise entre 60 et 75, en particulier entre 70 et 75 % en poids et des granulométries comprises entre 0,7 et 100 µm.

8. Liant selon une ou plusieurs des revendications 1 à 7,
**caractérisé en ce que**
le ciment présente un ciment normalisé selon la norme EN 197 et/ou DIN 1164 et une finesse normale présentant des granulométries d₉₅ comprises entre 20 et 70 µm et des surfaces spécifiques comprises entre 0,3 et 0,8 m²/g.

9. Liant selon la revendication 8,
**caractérisé en ce que**
le ciment est un ciment Portland ou un ciment Portland composite ou un ciment de haut-fourneau.

10. Liant selon la revendication 9,
**caractérisé en ce que**
un ciment fin en particulier présentant en outre des finesses d₉₅ d'une granulométrie comprises entre 2 et 20 µm et une surface spécifique comprise entre 1 et 5 m²/g est contenu, dans lequel le ciment fin est produit à base de klinker de ciment Portland et/ou de laitier fin.

11. Liant selon la revendication 10,
**caractérisé en ce que**
le rapport en poids entre le ciment normal et le ciment fin est de 0 :100 ou 100:0 à 20:1, en particulier de 3:1 à 5:1.

12. Liant selon une ou plusieurs des revendications 1 à 11,
**caractérisé en ce que**
la chaux blanche fine et/ou la chaux hydraulique présentent une surface spécifique comprise entre 1 et 3 m²/g.

13. Liant selon une ou plusieurs des revendications 1 à 12,
**caractérisé en ce que**
l'hydrate de chaux blanche fine et/ou l'hydrate de chaux hydraulique présentent une surface spécifique comprise entre 18 et 25 m²/g.

14. Procédé de production d'un liant selon une ou plusieurs des revendications 1 à 13 par mélange à sec des composants,
**caractérisé en ce que**
un prémélange d'au moins un composant de SiO₂ avec au moins un composant de CaO est prémélangé et ensuite le prémélange est mélangé avec le mélange contenant le ciment.
